# NEUE EUROPÄISCHE PATENTSCHRIFT

(11) **EP 2 683 873 B2**
(45) Veröffentlichungstag und Bekanntmachung des Hinweises auf die Entscheidung über den Einspruch: **18.11.2020**
(45) Hinweis auf die Patenterteilung: 25.06.2014
(21) Anmeldenummer: 12708810.2
(22) Anmeldetag: 07.03.2012
(51) Int. Cl.: E01C 19/26, E01C 19/28, F01P 5/02, F01P 3/18, E02D 3/026, E02D 3/032, E02D 3/046, E02D 3/02, F02B 29/04, F02M 25/07

(54) **BODENVERDICHTER**
SOIL COMPACTOR
COMPACTEUR DE SOL

(30) Priorität: 09.03.2011 DE 102011005275
(43) Veröffentlichungstag der Anmeldung: 15.01.2014
(73) Patentinhaber: Hamm AG, 95643 Tirschenreuth (DE)
(72) Erfinder: RÖHR, Andreas, 92637 Weiden (DE); BLETSCHER, Thomas, 95615 Marktredwitz (DE); ZIMMERER, Michael, 95505 Immenreuth (DE)
(74) Vertreter: Ruttensperger Lachnit Trossin Gomoll
(86) Internationale Anmeldenummer: PCT/EP2012/053874
(87) Internationale Veröffentlichungsnummer: WO 2012/120028

(56) Entgegenhaltungen:
- WO-A1-2009/151378
- DE-A1- 3 320 754

## Beschreibung

Die vorliegende Erfindung betrifft ein beispielsweise als Bodenverdichter ausgebildetes selbstfahrendes Baugerät gemäß dem Oberbegriff des Anspruchs 1.

Derartige Baugeräte werden beispielsweise im Straßenbau dazu eingesetzt, den mit Beton, Asphalt oder dergleichen zu überdeckenden Untergrund zu verdichten. Dazu bewegen sich die Bodenverdichter mit zumindest einer daran vorgesehenen und mit Vibrationen beaufschlagbaren Walze über das zu verdichtende Bodenaufbaumaterial. Die Antriebsenergie für den Fahrantrieb einerseits und den Rüttel- bzw. Vibrationsantrieb andererseits wird im Allgemeinen durch ein turbogeladenes Dieselantriebsaggregat bereitgestellt. Einem derartigen Antriebsaggregat ist zum Kühlen der durch einen Turbolader komprimierten und in den Brennraum einzuleitenden Luft eine allgemein auch als Ladeluftkühler bezeichnete Kühleranordnung zugeordnet. Ferner ist eine Kühleranordnung vorgesehen, vermittels welcher das Motorkühlmittel bzw. auch das für die hydraulische Betätigung verschiedenster Systembereiche bzw. den Fahrantrieb erforderliche Hydrauliköl gekühlt werden können (siehe z.B. Dokument WO 2009/151378 A1).

Ein Baugerät gemäß dem Oberbegriff des Anspruchs 1 ist aus der US 7,134,518 B2 bekannt.

Es ist die Aufgabe der vorliegenden Erfindung, ein selbstfahrendes Baugerät, insbesondere Bodenverdichter, bereitzustellen, welches bei kompaktem Aufbau eine Kraftstoff sparende Betriebsweise ermöglicht.

Erfindungsgemäß wird diese Aufgabe gelöst durch ein selbstfahrendes Baugerät, insbesondere Bodenverdichter, gemäß Anspruch 1. Dieses umfasst ein turbogeladenes Dieselantriebsaggregat mit einer ersten Kühleranordnung zum Kühlen von Ladeluft und einer zweiten Kühleranordnung zum Kühlen von Kühlflüssigkeit oder/und Hydrauliköl, wobei der ersten Kühleranordnung ein erstes Kühlergebläse zugeordnet ist und der zweiten Kühleranordnung ein zweites Kühlergebläse zugeordnet ist und das erste Kühlergebläse und das zweite Kühlergebläse voneinander im Wesentlichen unabhängig betreibbar sind.

Bei dem erfindungsgemäß aufgebauten Baugerät sind den beiden Kühleranordnungen voneinander unabhängige Kühlergebläse zugeordnet, wodurch es möglich wird, die verschiedenen Kühlergebläse tatsächlich auch nur dann und mit der erforderlichen Förderleistung zu betreiben, wenn eine Kühlung durchzuführen ist. Insbesondere wird es damit möglich, auf einen Betrieb des zweiten Kühlergebläses zu verzichten, wenn die durch dieses zu kühlende Kühlflüssigkeit bzw. das Hydrauliköl beispielsweise bei vergleichsweise niedrigen Umgebungstemperaturen oder in einer Betriebsstartphase tatsächlich nicht gekühlt werden müssen, während gleichzeitig aber die zur Verbrennung in das Dieselantriebsaggregat einzuleitende Luft nach der Verdichtung durch den Turbolader gekühlt werden muss.

Da im Allgemeinen das erste Kühlergebläse immer dann zu betreiben ist, wenn das Dieselantriebsaggregat in Betrieb ist, wird vorgeschlagen, dass das erste Kühlergebläse durch einen Nebenabtrieb des Dieselantriebsaggregats antreibbar ist.

Eine Einstellbarkeit der Förderleistung des ersten Kühlergebläses kann dabei erreicht werden, indem diesem eine Kupplungsanordnung, insbesondere Visko-Kupplung, zugeordnet ist. Somit wird es möglich, die am Nebenabtrieb des Dieselantriebsaggregats abgegriffene Energie entsprechend der erforderlichen Kühlleistung der ersten Kühleranordnung zu variieren.

Dem zweiten Kühlergebläse kann eine Gebläseantriebseinheit zugeordnet sein, so dass dieses auch unabhängig vom Betrieb des Antriebsaggregats betrieben werden kann. Diese Gebläseantriebseinheit kann beispielsweise einen Hydraulikmotor umfassen, also durch die in einem Hydraulikkreislauf enthaltene bzw. gespeicherte Energie betrieben werden.

Eine sehr raumsparende Positionierung der ersten Kühleranordnung wird dadurch erreicht, dass diese zur im Wesentlichen horizontalen Durchströmung mit Kühlluft im Wesentlichen vertikal orientiert angeordnet ist.

Weiter kann vorgesehen sein, dass die zweite Kühleranordnung bezüglich einer Vertikallinie geneigt angeordnet ist und im Kühlbetrieb von Kühlluft von unten nach oben durchströmbar ist. Insbesondere ist erfindungsgemäß vorgesehen, dass die zweite Kühleranordnung ausgehend von ihrem der ersten Kühleranordnung nahe liegenden Bereich sich in Richtung vom Dieselantriebsaggregat weg und nach unten erstreckt. Dadurch wird es möglich, das Dieselantriebsaggregat mit den beiden Kühleranordnungen in eine Außenkontur zu integrieren, welche dem Betriebspersonal von einem Führerstand aus eine sehr gute Sicht auf den im Umkreis der Baumaschine liegenden Untergrund ermöglicht.

Dies ist insbesondere von Vorteil, da die erste Kühleranordnung und die zweite Kühleranordnung an einer Nebenabtriebsseite des Dieselantriebsaggregats angeordnet sind.

Die beiden Kühleranordnungen müssen zur Durchströmbarkeit derselben mit dem zu kühlenden Medium, also der Ladeluft bzw. der Kühlflüssigkeit bzw. dem Hydrauliköl durch verschiedene Anschlussleitungen an das Dieselantriebsaggregat angekoppelt werden. Durch die im Betrieb auftretenden Schwingungen bzw. Vibrationen werden derartige Verbindungsleitungen sehr stark belastet. Wenn weiter vorgesehen ist, dass die erste Kühleranordnung und die zweite Kühleranordnung zu einer Vormontagebaugruppe zusammengefasst am Dieselantriebsaggregat festgelegt sind, kann dafür gesorgt werden, dass durch Schwingungen oder Vibrationen generierte Relativbewegungen zwischen den Kühleranordnungen und dem Dieselantriebsaggregatweitestgehend nicht auftreten, was zu einer deutlichen Minderung der Belastung derartiger Verbindungsleitungen führt.

Dieser auch unabhängig von dem Aspekt des Bereitstellens eigenständiger Kühlergebläse für die beiden Kühleranordnungen als Erfindung zu betrachtende Aspekt des Bereitstellens einer Vormontagebaugruppe kann in besonders vorteilhafter Weise dann auch genutzt werden, wenn diese Vormontagebaugruppe ferner umfasst:
- einen Klimaanlagenkondensator, oder/und
- eine Abgasnachbehandlungseinheit, vorzugsweise Abgaspartikelfilter oder/und Katalysator, oder/und
- das zweite Kühlergebläse.

Das Dieselantriebsaggregat kann dann weiterhin mit der daran festgelegten Vormontagebaugruppe als Baueinheit an der Baumaschine festgelegt werden. Dies ist nicht nur bei der Durchführung von Wartungsarbeiten vorteilhaft, sondern unterstützt die Entlastung der im Rahmen der Vormontagebaugruppe an das Dieselantriebsaggregat angefügten Baugruppen.

Die vorliegende Erfindung wird nachfolgend mit Bezug auf die beiliegenden Figuren detailliert beschrieben. Es zeigt:
- Fig. 1: eine Seitenansicht eines als Bodenverdichter ausgebildeten selbst fahrenden Baugeräts;
- Fig. 2: eine Seitenansicht eines Antriebsaggregats und von diesem zugeordneten Kühleranordnungen des in Fig. 1 dargestellten Baugeräts;
- Fig. 3: eine perspektivische Ansicht des Antriebsaggregats und der Kühleranordnungen.

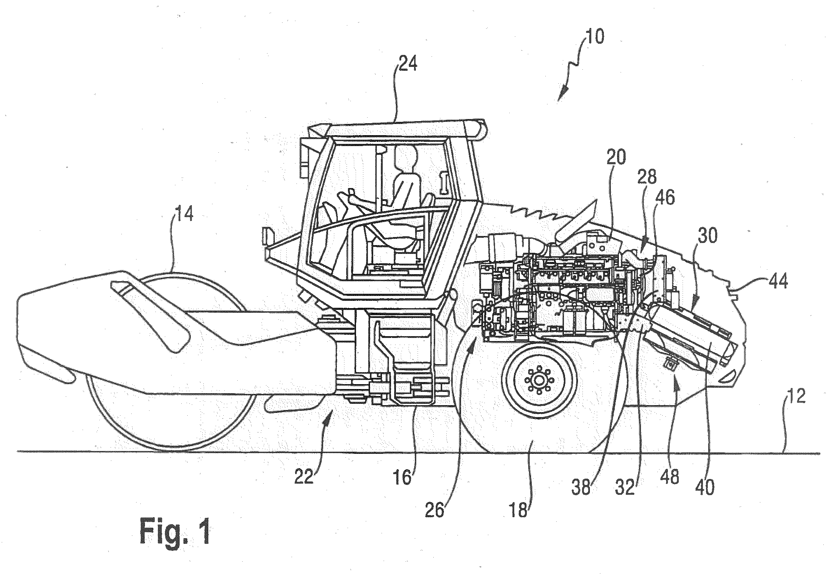

In Fig. 1 ist ein Bodenverdichter 10 als Beispiel eines selbstfahrenden Baugeräts dargestellt. Der Bodenverdichter 10 umfasst zum Verdichten des Aufbaumaterials eines Untergrunds 12 eine Verdichterwalze 14, welcher ein in der Fig. 1 nicht dargestellter Vibrations- bzw. Rüttelantrieb zugeordnet ist. Dieser im Wesentlichen hydraulisch betriebener Antrieb kann in der Verdichterwalze 14 untergebracht sein.

Zum Voranbewegen des Bodenverdichters 10 sind an einem Gelenkrahmen 16 desselben Fahrantriebsräder 18 vorgesehen. Die für den Fahrantrieb und auch für den Vibrations- bzw. Rüttelantrieb erforderliche Energie wird durch ein turbogeladenes Dieselantriebsaggregat 20 bereitgestellt. Dieses ist am Rahmen 16 des Bodenverdichters 16 näherungsweise in einem über den Fahrantriebsrädern 18 liegenden Bereich festgelegt. In einem Bereich zwischen den Fahrantriebsrädern 18 bzw. dem Dieselantriebsaggregat 20 und der Verdichterwalze 14 näherungsweise über der Gelenkverbindung 22 des Rahmens 16 ist eine Führerkabine 24 angeordnet, in welcher die den Bodenverdichter 10 bedienende Person Platz findet.

Durch das Dieselantriebsaggregat 20 wird eine in der Fig. 1 nur prinzipartig dargestellte Hydraulikantriebseinheit 26 angetrieben, welche mit einer Hydraulikpumpe den zum Betreiben verschiedener Systembereiche erforderlichen Hydraulikdruck generieren kann und mit einem Hydraulikmotor das für die Fahrantriebsräder 18 erforderliche Drehmoment bereitstellen kann.

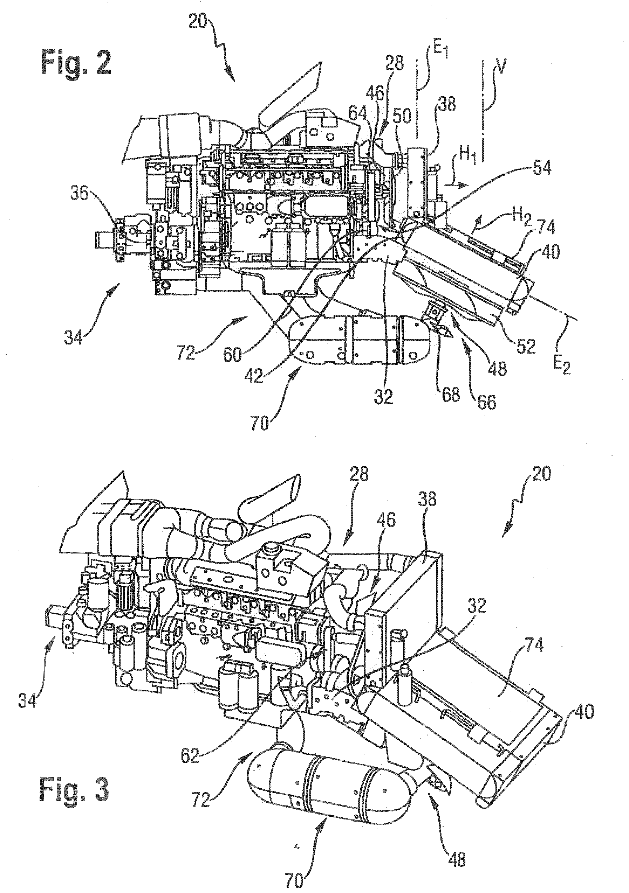

An einer von der Führerkabine 24 abgewandt liegenden Nebenabtriebsseite 28 des Dieselantriebsaggregats 20 ist eine allgemein mit 30 bezeichnete Vormontagebaugruppe vorgesehen, welche beispielsweise einen Vormontagerahmen 32 umfassen kann und mit diesem unmittelbar am Dieselantriebsaggregat 20 festgelegt ist. Der Aufbau dieser Vormontagebaugruppe 30 bzw. die darin umfassten Baugruppen werden nachfolgend mit Bezug auf die Fig. 2 und 3 detaillierter erläutert.

In den Fig. 2 und 3 erkennt man die Hauptabtriebsseite 34 des Dieselantriebsaggregats 20, an welcher über eine Hauptantriebswelle bzw. Kurbelwelle 36 eine Hydraulikpumpe oder ggf. mehrere Hydraulikpumpen der vorangehend angesprochenen Hydraulikantriebseinheit 26 angetrieben werden. An der Nebenabtriebsseite 28 liegen zwei Kühleranordnungen 38, 40. Die erste Kühleranordnung 38 dient zum Kühlen der in den Brennraum des Dieselantriebsaggregats 20 einzuleitenden und durch einen Turbolader verdichteten Verbrennungsluft und wird im Allgemeinen auch als Ladeluftkühler bezeichnet. Die zweite Kühleranordnung dient dazu, die unter anderem im Wassermantel des Dieselantriebsaggregats 20 zirkulierende Kühlflüssigkeit zu kühlen. Alternativ oder zusätzlich kann die zweite Kühleranordnung 40 dazu genutzt werden, das in einem Hydraulickreislauf zirkulierende Hydrauliköl zu kühlen.

Die erste Kühleranordnung 38 ist dabei im Wesentlichen so positioniert, dass eine Kühlerebene E₁ im Wesentlichen vertikal orientiert ist, also im Wesentlichen parallel zu einer Vertikallinie V liegt. Die Kühlerebene, E₁ ist im Wesentlichen eine Ebene, welche orthogonal steht zur Hauptströmungsrichtung H₁ der die erste Kühleranordnung 38 durchströmenden Kühlluft. In vertikaler Richtung unter der ersten Kühleranordnung 38 ist die zweite Kühleranordnung 40 derart angeordnet, dass sie im Wesentlichen in einer Ebene E₂ orientiert ist, die bezüglich der Vertikallinie V schräg verläuft bzw. geneigt ist, so dass die Hauptströmungsrichtung H₂ der durch die zweite Kühleranordnung 40 hindurch geförderten Luft schräg von unten nach oben und in Richtung von der Nebenabtriebsseite 28 weg gerichtet ist. Damit ergibt sich eine Anordnung, bei welcher die zweite Kühleranordnung 40 sich ausgehend von ihrem unter der ersten Kühleranordnung 38 und der Nebenabtriebsseite 28 nahe liegenden Bereich 42 schräg nach unten und von der Nebenabtriebsseite 28 weg erstreckt, so dass zwischen den beiden Ebenen E₁ und E₂ ein Winkel von mehr als 90° eingeschlossen ist.

Diese auch in der Fig. 3 deutlich erkennbare räumliche Beziehung zwischen den beiden Kühleranordnungen 38, 40 führt dazu, dass das Dieselantriebsaggregat 20 mit den beiden in der Vormontagebaugruppe 30 zusammengefassten Kühleranordnungen 38, 40 so an der Nebenabtriebsseite 28 des Dieselantriebsaggregats positioniert werden kann, dass eine in Fig. 1 erkennbare Verkleidung 44 des Bodenverdichters 10 in diesem Bereich abfallend konturiert sein kann. Dies ermöglicht der den Bodenverdichter bedienenden Person in der Führerkabine 24 einen guten Blick auf den in der Fig. 1 rechts hinter dem Bodenverdichter 10 liegenden Bereich des Untergrunds 12.

Den beiden Kühleranordnungen 38, 40 sind separate und grundsätzlich auch voneinander unabhängig betreibbare Kühlergebläse 46, 48 zugeordnet. Jedes der Kühlergebläse 46, 48 umfasst ein Förderrad 50 bzw. 52, beispielsweise jeweils mit einer Mehrzahl von Förderschaufeln. Eine Drehachse des Förderrads 50 des ersten Kühlergebläses 46 für die erste Kühleranordnung 38 liegt im Wesentlichen horizontal, steht also zu der die Orientierung der ersten Kühleranordnung 38 definierenden Ebene E₁ im Wesentlichen orthogonal und ist im Wesentlichen in der Hauptströmungsrichtung H₁ orientiert. Entsprechend ist eine Drehachse des Förderrads 52 des zweiten Kühlergebläses 48 der Kühleranordnung 40 zur Ebene E₂ im Wesentlichen orthogonal orientiert und liegt im Wesentlichen in Richtung der Hauptströmungsrichtung H₂.

Das Förderrad 50 des ersten Kühlergebläses 46 ist durch einen allgemein mit 54 bezeichneten Nebenabtrieb des Dieselantriebsaggregats 20 zur Drehung antreibbar. Dieser Nebenabtrieb 54 kann beispielsweise eine mit einer Hauptabtriebswelle, beispielsweise Kurbelwelle, des Dieselantriebsaggregats 20 drehfeste Riemenscheibe 60 umfassen, welche über einen Antriebsriemen 62 eine das Förderrad 50 tragende Riemenscheibe 64 zur Drehung antreibt, wenn das Dieselantriebsaggregat 20 in Betrieb ist. Um dabei die Drehzahl des Förderrads 50 und somit dessen Förderleistung einstellen zu können, kann beispielsweise in die Riemenscheibe 64 eine Kupplung, beispielsweise Visko-Kupplung, integriert sein, welche unter der Ansteuerung einer Ansteueranordnung steht und somit in ihrem Drehmomentübertragungsverhalten beeinflussbar ist.

Durch die Anbindung des Förderrads 50 des ersten Kühlergebläses 46 an das Dieselantriebsaggregat 20 wird sichergestellt, dass immer dann, wenn das Dieselantriebsaggregat 20 in Betrieb ist, auch das erste Kühlergebläse 46 in Betrieb ist und mithin die erste Kühleranordnung 38 zur Kühlung der in einem Turbolader verdichteten Luft wirksam sein kann.

Dem Förderrad 52 des zweiten Kühlergebläses 48 ist eine separate Gebläseantriebseinheit 66 zugeordnet. Diese kann beispielsweise einen Hydraulikmotor 68 umfassen, welcher aus dem Hydrauliksystem des Bodenverdichters 10 gespeist wird und beispielsweise durch entsprechende Ansteuerung einer Ventilanordnung oder einer Hydraulikpumpe aktiviert werden kann. Je nach Aktivierung des Hydraulikmotors 68 kann dann die Drehzahl des Förderrads 52 des zweiten Kühlergebläses 48 und somit dessen Förderleistung und die Kühlwirkung der zweiten Kühleranordnung 40 eingestellt werden. Der Hydraulikmotor 68 kann dann grundsätzlich betrieben werden, wenn durch den Betrieb des Dieselantriebsaggregats 20 ein entsprechender Hydraulikdruck bereitgestellt wird oder in einem Hydraulikdruckspeicher ausreichend Energie gespeichert ist, um den zum Betreiben des Hydraulikmotors 68 erforderlichen Betriebsdruck bereitzustellen. Bei einer alternativen Ausgestaltungsart, welche vom Betrieb des Dieselantriebsaggregats 20 grundsätzlich unabhängig ist, kann die Gebläseantriebseinheit 66 alternativ zum Hydraulikmotor 68 auch einen Elektroantriebsmotor umfassen, der dann von einer am Baugerät vorgesehenen Batterie gespeist wird.

Da die beiden Kühlergebläse 46, 48 einerseits separate Förderräder 50, 52 aufweisen und andererseits diese beiden Förderräder 50, 52 durch separate Antriebe in Drehung versetzt werden können, ist es möglich, die Kühlwirkung der beiden Kühleranordnungen voneinander unabhängig einzustellen. Dies ermöglicht es beispielsweise, auf ein Betreiben des zweiten Kühlergebläses 48 zu verzichten, wenn dies temperaturbedingt nicht erforderlich ist, während gleichzeitig die erste Kühleranordnung 38 bei betriebenem Antriebsaggregat 20 aktiv ist, um die Ladeluft zu kühlen. Dies führt dazu, dass die verschiedenen Kühlergebläse 46, 48 tatsächlich nur dann belastet werden, wenn dies erforderlich ist, und führt zu einer Energieeinsparung durch Verzicht auf den Betrieb zumindest des zweiten Kühlergebläses 48, wenn dies tatsächlich nicht erforderlich ist. Auch wird es damit möglich, die beiden Kühleranordnungen 38, 40 mit Hinblick auf die Art der zu kühlenden Medien einerseits und die jeweils vorliegenden Medienströme andererseits optimiert auszulegen. Insbesondere kann durch die Aufgliederung in zwei separate Kühleranordnungen 38, 40 jede davon kleiner dimensioniert werden, als dies bei einer für beide Aspekte gleichermaßen zu nutzenden Kühleranordnung der Fall wäre, was wiederum die Integration in die Verkleidung 44 des Bodenverdichters 10 vereinfacht.

Um eine definierte Strömungsführung für die beiden Kühleranordnungen 38, 40 vorzusehen, kann zwischen diesen ein in den Figuren nicht dargestelltes Leitelement, beispielsweise Leitblech vorgesehen sein, was auch dazu beitragen kann, Druckunterschiede zwischen den beiden Kühleranordnungen 38, 40 auszugleichen.

Wie vorangehend bereits angesprochen, sind die beiden Kühleranordnungen 38, 40 zusammengefasst zu der Vormontagebaugruppe 30 direkt am Dieselantriebsaggregat 20 festgelegt. Dies vereinfacht auch die Strömungsführung der zu kühlenden Medien, da vom Dieselantriebsaggregat 20 weg führende bzw. zu diesem hin führende Schlauchleitungen keine Relativbewegung zwischen dem Dieselantriebsaggregat 20 einerseits und den Kühleranordnungen 38, 40 andererseits ausgleichen können müssen. Zu diesem Zweck ist es weiterhin vorteilhaft, wenn auch das zweite Kühlergebläse 48 an dieser Vormontagebaugruppe 30 vorgesehen ist, wie dies in Fig. 1 verdeutlicht ist. Das erste Kühlergebläse 46 bildet keinen Teil der Vormontagebaugruppe 30, da dieses an der Nebenabtriebsseite 28 des Dieselantriebsaggregats 20 vorgesehen bzw. montiert ist. Das erste Kühlergebläse 46 wird also vor Anbringung der Vormontagebaugruppe 30 am Dieselantriebsaggregat 20 installiert.

Eine weitere an der Vormontagebaugruppe 30 vorteilhafterweise vorgesehene Baugruppe ist eine Abgasnachbehandlungeinheit 70, z.B. Partikelfilter oder/und Katalysator, für das Abgasführungssystem 72 des Dieselantriebsaggregats 20. Auch hier besteht der Vorteil, dass die vom Dieselantriebsaggregat 20 weg führende Abgasleitung an eine Baugruppe, nämlich die Abgasnachbehandlungseinheit 70, anzuschließen ist, welcher durch Integration desselben in die Vormontagebaugruppe 30 und durch Festlegung der Vormontagebaugruppe 30 am Dieselantriebsaggregat 20 selbst im Wesentlichen keine Relativbewegung bezüglich des Dieselantriebsaggregats 20 ausführen wird.

Einen weiteren Bestandteil der Vormontagebaugruppe 30 kann ein Klimaanlagenkondensator 74 bilden, welcher an der Kühlanordnung 40 an der vom zweiten Kühlergebläse 48 abgewandten Seite angebracht sein kann und somit von der durch das zweite Kühlergebläse 48 geförderten Luft umströmt werden kann. Weiter ist es möglich, in die Vormontagebaugruppe 30 einen Dieselkühler für den Innenbrennraum des Dieselantriebsaggregats 20 einzuleitenden Dieselkraftstoff bereitzustellen.

Das mit dieser Vormontagebaugruppe zusammengesetzte Dieselantriebsaggregat 20 kann als Ganzes am Rahmen 16 des Bodenverdichters 10 festgelegt werden und in dieser Gesamtheit auch zur Durchführung von Wartungsarbeiten herausgenommen werden. Dieser Aspekt des Zusammenfassens verschiedener Baugruppen, insbesondere der beiden Kühleranordnungen 38, 40 zu einer Vormontageeinheit 30, ist besonders vorteilhaft und kann auch dann genutzt werden, wenn beispielsweise den beiden Kühleranordnungen 38, 40 nicht separate oder/und separat betreibbare Kühlergebläse zugeordnet sind. Auch kann die räumliche Zuordnung der beiden Kühleranordnungen unter Beibehalt der vorteilhaften Aspekte, die sich durch das Bereitstellen der Vormontagebaugruppe ergeben, so sein, wie in den Figuren dargestellt. Grundsätzlich könnte hinsichtlich dieses Aspekts selbstverständlich auch eine andere räumliche Zuordnung der beiden Kühleranordnungen 38, 40 gewählt werden.

## Patentansprüche

1. Selbstfahrendes Baugerät, insbesondere Bodenverdichter, umfassend ein turbogeladenes Dieselantriebsaggregat (20) mit einer ersten Kühleranordnung (38) zum Kühlen von Ladeluft und einer zweiten Kühleranordnung (40) zum Kühlen von Kühlflüssigkeit oder/und Hydrauliköl, wobei der ersten Kühleranordnung (38) ein erstes Kühlergebläse (46) zugeordnet ist und der zweiten Kühleranordnung (40) ein zweites Kühlergebläse (48) zugeordnet ist und das erste Kühlergebläse (46) und das zweite Kühlergebläse (48) voneinander im Wesentlichen unabhängig betreibbar sind, wobei die erste Kühleranordnung (38) und die zweite Kühleranordnung (40) an einer Nebenabtriebsseite (28) des Dieselantriebsaggregats (20) angeordnet sind und die erste Kühleranordnung (38) zur im Wesentlichen horizontalen Durchströmung mit Kühlluft im Wesentlichen vertikal orientiert angeordnet ist, **dadurch gekennzeichnet, dass** die zweite Kühleranordnung (40) ausgehend von ihrem der ersten Kühleranordnung (38) nahe liegenden Bereich (42) sich in Richtung von der Nebenabtriebsseite (28) des Dieselantriebsaggregats (20) weg und nach unten erstreckt.

2. Selbstfahrendes Baugerät nach Anspruch 1,
**dadurch gekennzeichnet, dass** das erste Kühlergebläse (46) durch einen Nebenabtrieb (60, 62, 64) des Dieselantriebsaggregats (20) antreibbar ist.

3. Selbstfahrendes Baugerät nach Anspruch 2,
**dadurch gekennzeichnet, dass** dem ersten Kühlergebläse (38) zur Einstellung der Förderleistung eine Kupplungsanordnung zugeordnet ist.

4. Selbstfahrendes Baugerät nach Anspruch 3,
**dadurch gekennzeichnet, dass** die Kupplungsanordnung eine Visko-Kupplung umfasst.

5. Selbstfahrendes Baugerät nach einem der Ansprüche 1 bis 4,
**dadurch gekennzeichnet, dass** dem zweiten Kühlergebläse (48) eine Gebläseantriebseinheit (66) zugeordnet ist.

6. Selbstfahrendes Baugerät nach Anspruch 5,
**dadurch gekennzeichnet, dass** die Gebläseantriebseinheit (66) einen Hydraulikmotor (68) umfasst.

7. Selbstfahrendes Baugerät nach einem der Ansprüche 1 bis 6,
**dadurch gekennzeichnet, dass** die zweite Kühleranordnung (40) bezüglich einer Vertikallinie (V) geneigt angeordnet ist und im Kühlbetrieb von Kühlluft von unten nach oben durchströmbar ist.

8. Selbstfahrendes Baugerät nach einem der Ansprüche 1 bis 7,
**dadurch gekennzeichnet, dass** die zweite Kühleranordnung (40) in Vertikalrichtung unter der ersten Kühleranordnung (38) angeordnet ist,
und

9. Selbstfahrendes Baugerät nach einem der Ansprüche 1 bis 8,
**dadurch gekennzeichnet, dass** die erste Kühleranordnung (38) und die zweite Kühleranordnung (40) zu einer Vormontagebaugruppe (30) zusammengefasst am Dieselantriebsaggregat (20) festgelegt sind.

10. Selbstfahrendes Baugerät nach Anspruch 9,
**dadurch gekennzeichnet, dass** die Vormontagebaugruppe (30) ferner umfasst:
- einen Klimaanlagenkondensator (74), oder/und
- eine Abgasnachbehandlungseinheit (70), vorzugsweise Abgaspartikelfilter oder/und Katalysator, oder/und
- das zweite Kühlergebläse (48).

11. Selbstfahrendes Baugerät nach Anspruch 9 oder 10,
**dadurch gekennzeichnet, dass** das Dieselantriebsaggregat (20) mit der daran festgelegten Vormontagebaugruppe (30) als Baueinheit an einem Baumaschinenrahmen (16) festgelegt ist.

## Claims

1. Self-propelled construction device, in particular a soil compactor, comprising a turbocharged diesel engine (20) with a first radiator arrangement (38) for cooling charge air and a second radiator arrangement (40) for cooling a liquid coolant and/or hydraulic oil, wherein a first radiator fan (46) is allocated to the first radiator arrangement (38) and a second radiator fan (48) is allocated to the second radiator arrangement (40) and the first radiator fan (46) and the second radiator fan (48) can be operated essentially independently from each other, wherein the first radiator arrangement (38) and the second radiator arrangement (40) are arranged at a secondary energy take-off side (28) of the diesel engine (20) and the first radiator arrangement (38) is arranged essentially in vertical alignment for an essentially horizontal flow of cooling air, **characterized in that** the second radiator arrangement (40), starting from its area (42) near the first radiator arrangement (38), extends in the direction away from the diesel engine (20) and downwardly.

2. Self-propelled construction device according to claim 1,
**characterized in that** the first radiator fan (46) can be driven by a secondary energy take-off (60, 62, 64) of the diesel engine (20).

3. Self-propelled construction device according to claim 2,
**characterized in that** a clutch arrangement is allocated to the first radiator fan (38) to adjust the flow rate.

4. Self-propelled construction device according to claim 3,
**characterized in that** the clutch arrangement comprises a visco-clutch.

5. Self-propelled construction device according to one of claims 1 to 4,
**characterized in that** a fan drive unit (66) is allocated to the second radiator fan (48).

6. Self-propelled construction device according to claim 5,
**characterized in that** the fan drive unit (66) comprises a hydraulic engine (68).

7. Self-propelled construction device according to one of claims 1 to 6,
**characterized in that** the second radiator arrangement (40) is arranged inclined in reference to a vertical line (V) and cooling air can flow through it in the cooling mode from the bottom to the top.

8. Self-propelled construction device according to one of claims 1 to 7,
**characterized in that** the second radiator arrangement (40) is provided in the vertical direction below the first radiator arrangement (38).

9. Self-propelled construction device according to one of claims 1 to 8,
**characterized in that** the first radiator arrangement (38) and the second radiator arrangement (40) are combined to a pre-assembly (30), fixed at the diesel engine (20).

10. Self-propelled construction device according to claim 9,
**characterized in that** the pre-assembly (30) further comprises:
- an air-conditioning condenser (74), or/and
- an exhaust gas post-treatment unit (70), preferably an exhaust particle filter or/and catalytic converter, or/and
- the second radiator fan (48).

11. Self-propelled construction device according to claim 9 or 10,
**characterized in that** the diesel engine (20) is fixed with the pre-assembly (30) fastened thereat as one unit at a construction device frame (16).

## Revendications

1. Appareil de construction automoteur, en particulier un compacteur de sol, comprenant un moteur turbocompresseur à diesel (20) avec un premier arrangement de radiateur (38) pour refroidir de l'air de charge et un deuxième arrangement de radiateur (40) pour refroidir du liquide de refroidissement ou/et de l'huile hydraulique, dans lequel un premier ventilateur de refroidissement (46) est associé au premier arrangement de refroidissement (38) et un deuxième ventilateur de refroidissement (48) est associé au deuxième arrangement de refroidissement (40) et le premier ventilateur de refroidissement (46) et le deuxième ventilateur de refroidissement (48) peuvent être opérés de façon essentiellement indépendante l'un de l'autre, dans lequel le premier arrangement de refroidissement (38) et le deuxième arrangement de refroidissement (40) sont arrangés à un côté de sortie auxiliaire (28) du moteur à diesel (20) et le premier arrangement de refroidissement (38) étant arrangé essentiellement verticalement pour un passage essentiellement horizontal de l'air de refroidissement, **caractérisé en ce que** le deuxième arrangement de refroidissement (40) à partir de sa région (42) près du premier arrangement de refroidissement (38) s'étend dans la direction opposée au côté e sortie auxiliaire (28) du moteur à diesel (20) et envers le bas.

2. Appareil de construction automoteur selon la revendication 1,
**caractérisé par** le premier ventilateur de refroidissement (46) pouvant être entraîné par une sortie auxiliaire secondaire (60, 62, 64) du moteur diesel (20).

3. Appareil de construction automoteur selon la revendication 2,
**caractérisé par** un arrangement d'embrayage étant associé au premier ventilateur de refroidissement (38) pour ajuster le débit.

4. Appareil de construction automoteur selon la revendication 3,
**caractérisé par** l'arrangement d'embrayage comprenant un visco-embrayage.

5. Appareil de construction automoteur selon une des revendications 1 à 4,
**caractérisé par** une unité d'entraînement de ventilateur (66) étant associée au deuxième ventilateur de refroidissement (48).

6. Appareil de construction automoteur selon la revendication 5,
**caractérisé par** l'unité d'entraînement de ventilateur (66) comprenant un moteur hydraulique (68).

7. Appareil de construction automoteur selon une des revendications 1 à 6,
**caractérisé par** le deuxième arrangement de refroidissement (40) étant arrangé d'une manière inclinée en relation à une ligne verticale (V) et par de l'air de refroidissement pouvant passer d'en bas vers le haut pendant l'opération de refroidissement.

8. Appareil de construction automoteur selon une des revendications 1 à 7,
**caractérisé par** le deuxième arrangement de refroidissement (40) étant prévue dans la direction verticale en dessous du premier arrangement de refroidissement (38).

9. Appareil de construction automoteur selon une des revendications 1 à 8,
**caractérisé par** le premier arrangement de refroidissement (38) et le deuxième arrangement de refroidissement (40) étant combinés à un assemblage de prémontage (30), fixé au moteur à diesel (20).

10. Appareil de construction automoteur selon la revendication 9,
**caractérisé par** l'assemblage de prémontage (30) comprenant en outre:
- un condensateur de climatisation (74), ou/et
- une unité de post-traitement de gaz d'échappement (70), de préférence un filtre de particules de gaz d'échappement ou/et un catalyseur, ou/et
- le deuxième ventilateur de refroidissement (48).

11. Appareil de construction automoteur selon les revendications 9 ou 10,
**caractérisé par** le moteur à diesel (20) étant fixé avec l'assemblage de prémontage (30) fixé à ce dernier en tant qu'unité de construction à un cadre d'appareil de construction (16).
